# EUROPÄISCHE PATENTSCHRIFT

(11) **EP 1 107 855 B1**
(45) Veröffentlichungstag und Bekanntmachung des Hinweises auf die Patenterteilung: **02.10.2002**
(21) Anmeldenummer: 99922081.7
(22) Anmeldetag: 25.03.1999
(51) Int. Cl.: B29C 45/27, B29C 45/37

(54) **VERFAHREN UND VORRICHTUNG ZUM SPRITZGIESSEN EINER KUNSTSTOFFMASSE**
METHOD AND DEVICE FOR INJECTION-MOULDING A PLASTIC MATERIAL
PROCEDE ET DISPOSITIF DE MOULAGE PAR INJECTION D'UNE MATIERE PLASTIQUE

(30) Priorität: 28.08.1998 DE 19840539
(43) Veröffentlichungstag der Anmeldung: 20.06.2001
(73) Patentinhaber: Demag-Ergotech GmbH, 90571 Schwaig (DE); Poranunt Company Ltd., Bangkok 10250 (TH)
(72) Erfinder: TYLOR, Glenn, 10250 Bangkok (TH); CHIRADEJNANT, Prajak, 10250 Bangkok (TH); BERGEDIECK, Jürgen, D-99423 Weimar (DE); JAEGER, Ansgar, D-91207 Lauf (DE)
(74) Vertreter: Meissner, Peter E., Dipl.-Ing.
(86) Internationale Anmeldenummer: DE9900974
(87) Internationale Veröffentlichungsnummer: WO00012285

(56) Entgegenhaltungen:
- EP-A- 0 542 505
- DE-A- 3 303 756
- PATENT ABSTRACTS OF JAPAN vol. 9, no. 226 (M-412), 12. September 1985 (1985-09-12) & JP 60 082314 A (ISHIDA KOUKI SEISAKUSHO K.K.), 10. Mai 1985 (1985-05-10)
- PATENT ABSTRACTS OF JAPAN vol. 13, no. 76 (M-800), 21. Februar 1989 (1989-02-21) & JP 63 276518 A (SUMITOMO HEAVY IND LTD), 14. November 1988 (1988-11-14)

## Beschreibung

Die Erfindung betrifft ein Verfahren zum Einspritzen einer Kunststoffmasse mit einer Einspritzeinrichtung in eine Kavität gemäß Patentanspruch 1, sowie eine Spritzgießvorrichtung gemäß Patentanspruch 4.

Aus der EP 0 542 505 ist ein Verfahren bekannt, bei dem die Kunststoffmasse in Form unabhängiger Stromfäden sequentiell in die Kavität eingegeben wird und gleichzeitig die Stromfäden durch Verdrehen eines die Materialzuführungsöffnungen aufweisenden Materialzuführungsbauteiles gewendelt werden. Nach Füllen und Abkühlen des Formteiles wird die Anspritzung durch weiteres Verdrehen der Materialzuführungsöffnungen abgeschert.

Aus DE 196 17 349 C1 ist ein Kunststoffspritzgießverfahren zur Herstellung von Behältern bekannt, bei denen thermoplastischer Werkstoff über mehrere Ringdüsen in die Kavität eines Spritzgießwerkzeuges eingepreßt wird. Der über die Ringspalte in das Spritzgießwerkzeug eingepreßte plastische Werkstoff behält dabei die durch die Ringspalte ausgebildeten einzelnen Schichten auch noch im erstarrten Zustand und darüber hinaus bei.

Aus EP 0 441 868 B1 ist eine Düse zum Einspritzen von Kunststoffen, härtbaren Harzen oder Kautschuk bekannt, bei dem die Position eines Verschließrohres im Düsengehäuse einstellbar ist. Durch Verstellen des Verschließrohres in seiner axialen Position entsteht ein zentraler Materialstrom, der von einem hiervon getrennt ebenfalls der Kavität zugeführten hülsenförmigen Materialstrom umhüllt wird. Die Strömung des in die Kavität geführten Materials weist in die gleiche Richtung wie die Hauptachse der Spritzgießeinrichtung.
Die Erfindung hat sich das Ziel gesetzt, ein Verfahren und eine entsprechende Einrichtung zu schaffen, bei dem mit einfachen und konstruktiven Mitteln und Einsatz möglichst geringer Energie dem Kunststoffmaterial unmittelbar vor seinem Eintritt in die Kavität einen nicht isotropen Aufbau ermöglicht wird.

Die Erfindung erreicht dieses Ziel durch die Merkmale des Verfahrensanspruchs 1 und des Vorrichtungsanspruchs 4.

Das Eingeben der Kunststoffmasse erfolgt dabei so, dass während des Einspritzvorganges die im Zentrum sich befindenden Stromfäden der Kunststoffmasse den übrigen Stromfäden voreilen.

In vorteilhafter Weise werden gerade bei kreissymmetrischen Produkten, wie z.B. Eimern mit geringen Wanddicken, trotz der vergrößernden Anspritzfläche keine Zusammenflußstellen (Bindenähte) erzeugt, weil das im Zentrum eingespritzte Kunststoffmaterial dem aus den übrigen Öffnungen austretenden vorauseilt.

Die freie Fläche der Öffnungen des Materialzufuhrbauteils ist dabei deutlich größer als der Durchmesser der Materialzuführleitung in der Maschinendüse mit der Folge, dass ein geringer Druckaufbau beim Einspritzen in die Kavität vorhanden ist. Hierdurch wird insgesamt weniger Energie verbraucht, und zwar beim Einspritzen und für den Aufwand der Schließkraft.

Darüber hinaus ist durch die Rotationsströmung eine geringere Materialmenge erforderlich, wobei das Material weniger einer Scherbelastung unterliegt. Durch die insgesamt günstigere Orientierung des Kunststoffmaterials sind Produkte herstellbar, die eine deutlich geringere Wanddicke aufweisen.

Nach Füllen und Abkühlen der Kavität wird die Anspritzung durch die Aufrechterhaltung des Verdrehens der Materialzuführöffnungen abgeschert. Hierdurch werden die Anspritzstellen ebenso sauber, wie es von Punktanbindung bekannt ist.

Die Stromfäden können beliebige Querschnitte aufweisen, und zwar von kreisförmig bis zu rechteckig, wobei letztere auf zur zentralen Öffnung konzentrisch angeordneten Ringen vorgesehen sind.

Das die Kunststoffmasse der Kavität zuführende Materialzuführbauteil kann in verschiedenen Formen ausgestaltet sein. In einer Ausgestaltung weist dieses Bauteil Bohrungen auf, die mit der Zentralbohrung der Maschinendüse verbunden sind. Dieses Bauteil ähnelt dabei dem Aufbau der Maschinendüse, weist aber ergänzend einen Antrieb auf, durch welchen es in Rotation versetzt wird. Hierbei treibt ein Motor, der ggf. im Werkzeug integriert ist, ein Ritzel an, welches mit dem Materialzuführbauteil korrespondiert

In einer weiteren Ausgestaltung ist das Materialzuführbauteil als Topf ausgestaltet, dessen Boden sich im festen Werkzeugteil abstützt, während der Topf anderenends an der Maschinendüse gelagert ist. Hierbei ist der gesamte Topf von einem Antrieb in Rotation versetzbar. Der Innenteil des Topfes bildet eine Kammer, in der sich das Kunststoffmaterial, bevor es in die Kavität eingespritzt wird, gleichmäßig verteilen kann. Die Öffnungen im Boden weisen verschiedene Durchmesser auf, wobei der Durchmesser der außenliegenden Öffnungen entsprechend ihres Abstandes zum Zentrum kleiner ist.
Die freie Querschnittsfläche der Öffnungen betrgt in der Summe mindestens das 1,3-fache der Querschnittsfläche am Austritt der Verbindungsleitung 12.

Bei einer anderen Ausgestaltung ist das Materialzuführbauteil in Form einer Hülse aufgebaut, die die Verbindung von der Spritzgießmaschine zum Werkzeug darstellt ist. Bei einer Ausgestaltung ist der gesamte Boden antreibbar, in der anderen stützt sich die Hülse einenends unmittelbar am Werkzeug ab und der Boden ist innerhalb der Hülse angeordnet durch einen Durchtritt der Seitenwandung antreibbar.

In einer weiteren Ausgestaltung ist an dem Boden des Materialzuführbauteils ein torpedoartiger Ansatz vorgesehen, der über elektromagnetische Antriebe von außen in Rotation versetzbar ist.

Zu einer besonders gezielten Führung der Materialfäden ist in der Kavität gegenüber der zentralen Öffnung des Materialzufuhrbauteils eine Prallplatte vorgesehen. Diese Prallplatte besitzte eine Auskolkung, durch die das Material gleichmäßig zu allen Seiten in der Kavität geführt wird.

Eine Beispiel der Erfindung ist in der beiliegenden Zeichnung dargelegt. Dabei zeigen
- Fig. 1: das Materialzuführbauteil mit Kanälen,
- Fig. 2: das topfförmiges Materialzuführbauteil,
- Fig. 3: das Materialzuführbauteil als Hülse mit beweglichem Gesamtboden,
- Fig. 4: das Materialzuführbauteil mit beweglichem innenliegenden Boden,
- Fig. 5: den Boden des Materialzuführbauteils als Torpedo,
- Fig. 6: Vorderansichten des Bodens mit verschiedenen Formen der Öffnungen,
- Fig. 7: Prallplatte,
- Fig. 8: Strömungsverhalten der Kunststoffmasse im Bereich der Anspritzung,
- Fig. 9: Strömungsverhalten der Kunststoffmasse bei einem Gesamtbauteil.

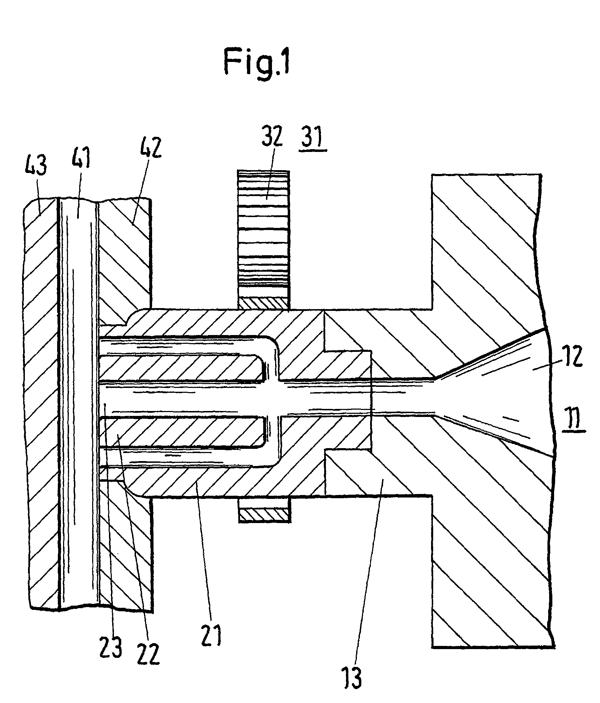

Bei den Fig. 1 bis 5 ist jeweils nur ein Teil der Einspritzeinrichtung gezeigt, das eine Verbindungsleitung 12 zur von dem festen Werkzeug 42 und der beweglichen Werkzeugplatte 23 gebildeten Kavität 41 aufweist. Die Verbindungsleitung 12 ist dabei in einer Maschinendüse 13 angeordnet. Zwischen der Maschinendüse 13 und dem festen Werkzeug 42 ist ein Materialzuführungsbauteil 21 angeordnet. Weiterhin ist ein Antrieb 31 vorgesehen, der in den Fig. 1 bis 4 ein Ritzel 32 aufweist, mit dem zumindest der Boden 26 des Materialzuführungsbauteils 21 in Rotation versetzbar ist.

In der Fig. 1 ist das Materialzuführungsbauteil aus einem aus Vollmaterial bestehenden Zylinder hergestellt, in den Öffnungen 23 als Kanäle eingebracht sind. Diese Kanäle 23 sind so ausgestaltet, daß die zentrische Öffnung 23 nicht nur den größten Durchmesser, sondern auch die geringste Länge aufweist, während die außerhalb des Zentrums vorgesehenen Kanäle hierzu nicht nur einen kleineren Durchmesser aufweisen, sondern auch länger sind. Hierdurch wird sichergestellt, daß beim Einspritzen die Kunststoffmasse im Zentrum den übrigen Stromfäden vorauseilt.

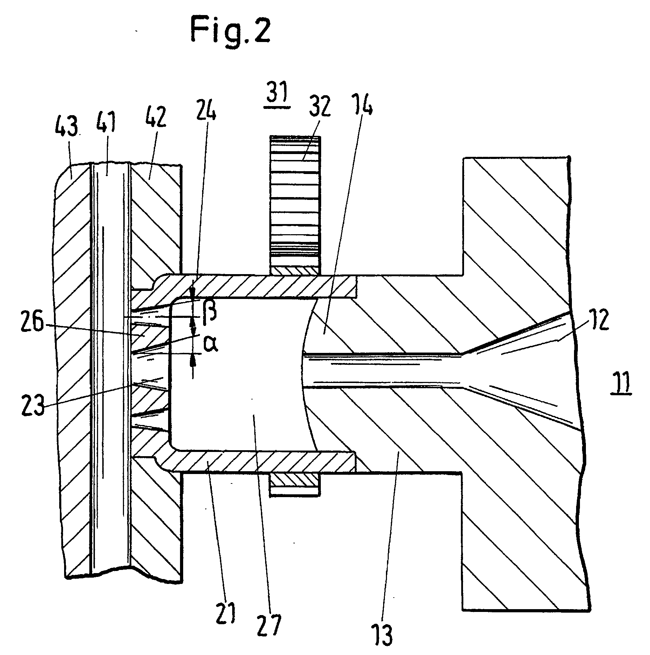

In der Fig. 2 ist das Materialzuführungsbauteil 21 als Topf ausgestaltet. der auf den Kopf der Maschinendüse 14 aufsteckbar ist. Der Boden 26 des Topfes 24 weist die Öffnungen 23 auf, die in Fließrichtung konisch zulaufen, wobei die inneren Öffnungen 23 einen Winkel α aufweisen, der deutlich größer ist als der Winkel β der übrigen Öffnungen 23.

Zwischen dem Kopf der Maschinendüse 14 und dem Boden 26 des Topfes 24 befindet sich eine Kammer 27.

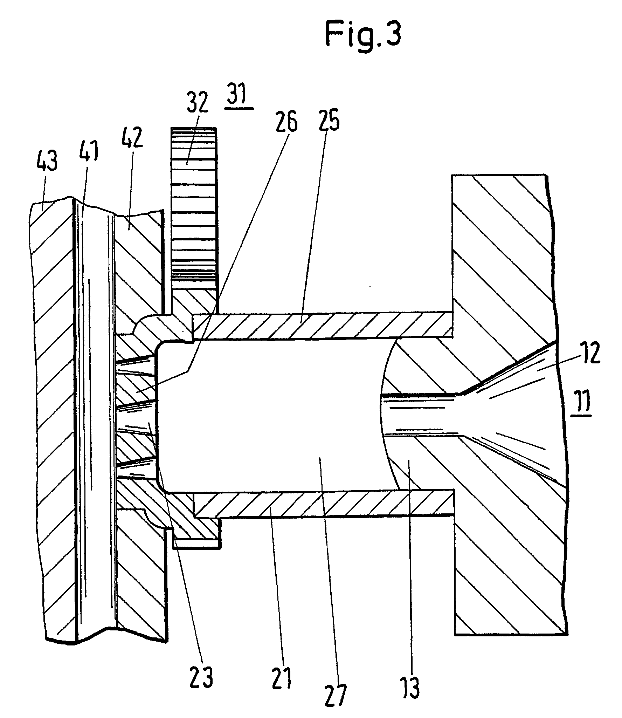

In der Fig. 3 ist das Materialzuführungsbauteil 21 als Hülse 25 ausgestaltet, dessen gesamter Boden 26 durch den Antrieb 31 in Rotation versetzbar ist.

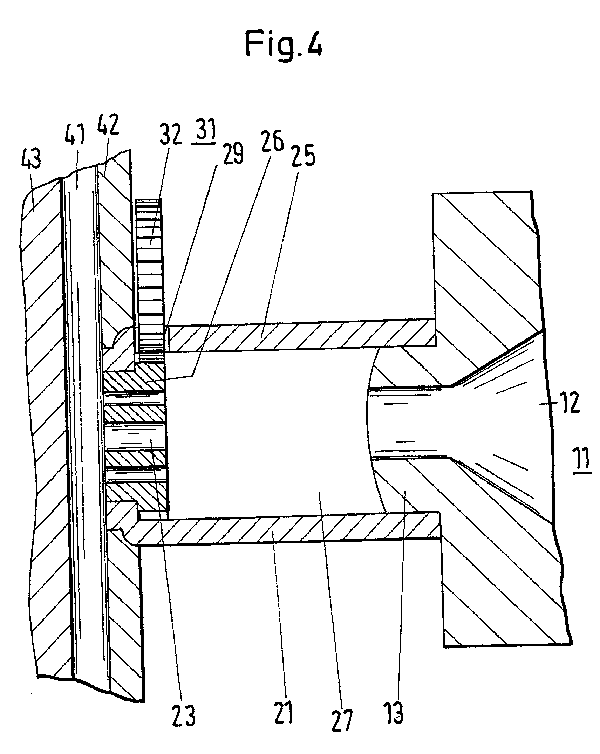

In der Fig. 4 ist das Materialzuführungsbauteil 21 als Hülse 25 ausgebildet, die zwischen der Maschinendüse 13 und dem festen Werkzeug 42 eingespannt ist. Der Boden 26 befindet sich innerhalb der Hülse 25 und wird von außen über ein Ritzel 32, das durch einen Durchtritt 29 mit dem Boden 26 korrespondiert, angetrieben.

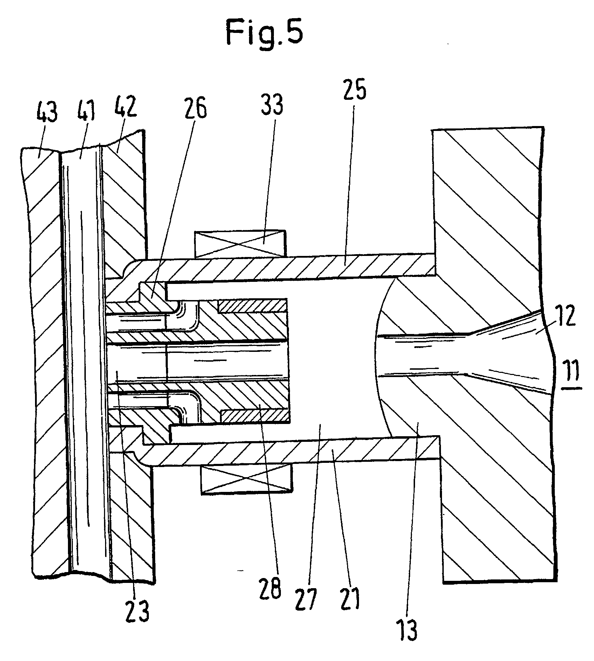

In der Fig. 5 ist im Gegensatz zu Fig. 4 die Hülse 25 komplett geschlossen. Am Boden 26 ist ein torpedoförmiger Ansatz 28 angeordnet, der in der Weise sowohl vom Material als auch von seiner Form ausgestaltet ist, daß er von einem elektromagnetischen Antrieb 33, welcher an der Außenwandung der Hülse 25 befestigt ist, angetrieben wird.

Die Öffnungen 23 im Boden 26 besitzen Abmessungen, die ein Voreilen der durch die zentrische Öffnung 23 geführten Kunststoffmasse im Vergleich zu den übrigen Stromfäden bewirken.

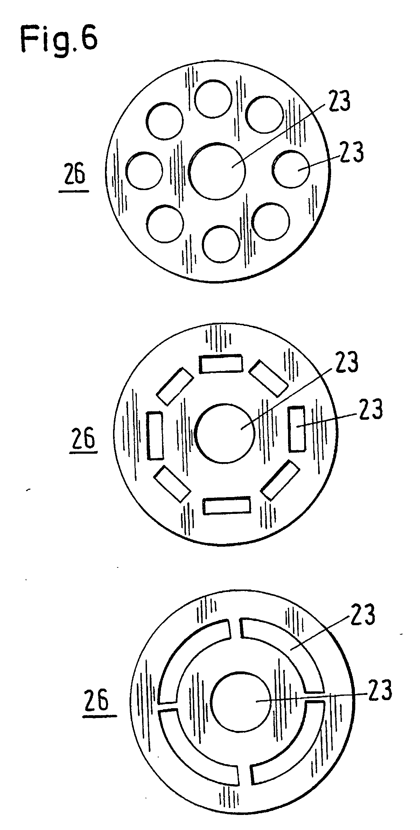

In der Fig. 6 sind Draufsichten des Bodens 26 dargestellt, in dem Öffnungen 23 vorgesehen sind. im oberen Teil der Figur sind Bohrungen oder Kanäle dargestellt. Im mittleren Teil sind die Öffnungen 23 als Rechtecke dargestellt, bei denen das Längen/Breitenverhältnis l/b größer > 2 beträgt. Im unteren Teil der Figuren sind die rechteckigen Öffnungen 23 ringförmig um das Zentrum angeordnet.

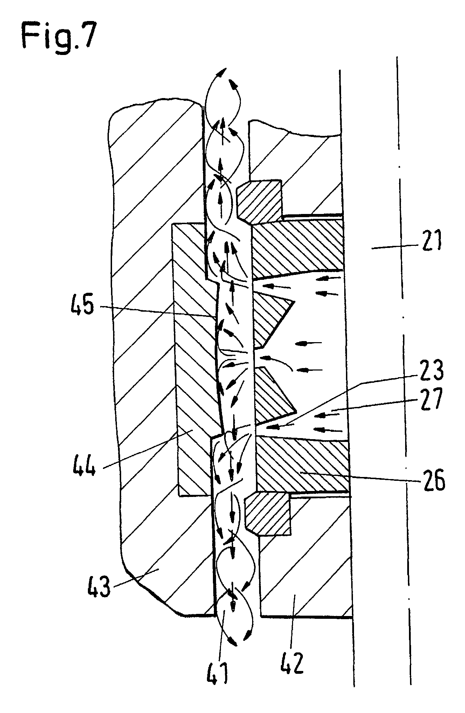

Die Fig. 7 zeigt im Detail die Kavität 41, die durch die bewegliche Werkzeugplatte 43, das feste Werkzeug 42 sowie den Boden 26 des Materialzuführungsbauteils 21 gebildet wird. An der Innenseite der beweglichen Werkzeugplatte 43 ist ein Prallelement 44 vorgesehen, welches eine Auskolkung 45 besitzt.

Die einzelnen Pfeile zeigen die Bewegungsrichtung der Stromfäden, die aus der Kammer 27 kommend über die Öffnungen 23 in die Kavität gelangen. Das durch die zentrale Öffnung in die Kavität geführte Kunststoffmaterial prallt auf die Prallplatte 44 und wird von dort gleichmäßig verteilt.

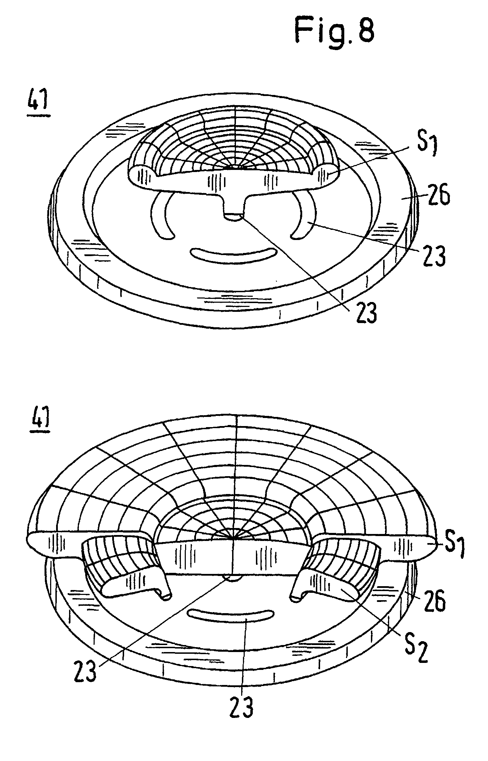

In der Fig. 8 sind zwei Momentaufnahmen während des Einspritzvorgangs dargelegt. Im oberen Teil ist zu erkennen, daß das Material S₁ durch die zentrale Öffnung des Bodens 26 in die Kavität geführt wird und sich dort pilzartig ausbreitet. Im unteren Teil des Bildes ist zu erkennen, daß sich die durch die zentrale Öffnung 29 geführte Schmelze S₁ so weit durch die äußere Öffnung 23 geführten Schmelze S₂ vorgeeilt ist, daß die Schmelze S₂ von der Schmelze S₁ umhüllt wird.

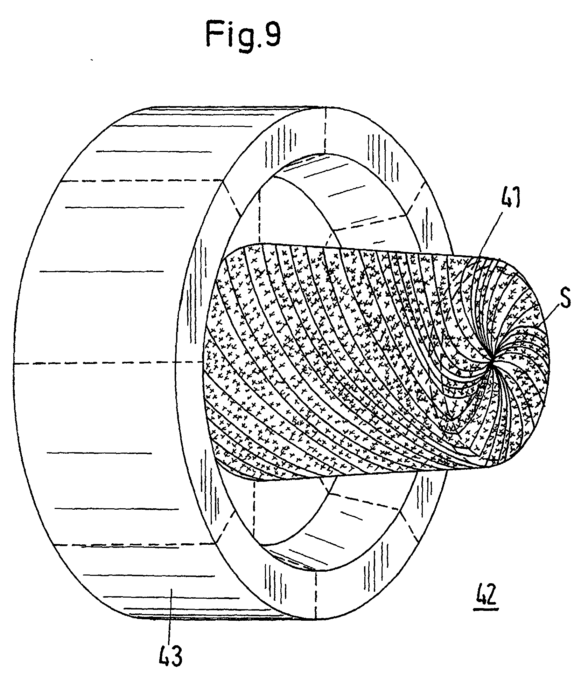

In der Fig. 9 ist eine Momentaufnahme der Stromfäden S in der Kavität 41 dargelegt. Im vorliegenden Werkzeug 42, 43 werden beispielsweise Eimer dargestellt. Es zeigt sich, daß die Stromfäden wendelförmig in die Kavität eingebraucht werden.

### Positionsliste

### Spritzgießanlage

- Einspritzeinrichtung: 11
- Verbindungsleitung: 12
- Maschinendüse: 13
- Kopf der Maschinendüse: 14

### Zuführen

- Materialzuführungsbauteil: 21
- Mündung: 22
- Öffnungen: 23
- Topf: 24
- Hülse: 25
- Boden: 26
- Kammer: 27
- torpedoförmiger Ansatz: 28
- Durchtritt: 29

### Antreiben

- Antrieb: 31
- Ritzel: 32
- elektromagnetischer Antrieb: 33

### Formen

- Kavität: 41
- Werkzeug (fest): 42
- bewegliche Werkzeugplatte: 43
- Prallelement: 44
- Auskolkung: 45
- Zentralachse: I
- Konuswinkel im Zentrum: α
- Konuswinkel außerhalb des Zentrums: β

## Patentansprüche

1. Verfahren zum Einspritzen einer Kunststoffmasse mit einer Einspritzeinrichtung in eine Kavität (41), wobei
a) die Kunststoffmasse in Form unabhängiger Stromfäden sequentiell in die Kavität (41) eingegeben wird, wobei während des Einspritzvorganges die im Teil des Zentrums sich befindenden Stromfäden der Kunststoffmasse den übrigen Stromfäden voreilen.
b) gleichzeitig die Stromfäden durch Verdrehen des die Öffnungen (23) aufweisende Materialzuführungsbauteils gewendelt werden,
c) und nach Füllen und Abkühlen der Kavität die Anspritzung durch Aufrechterhalten des Verdrehens der Materialzufuhröffnungen (23) abgeschert wird.

2. Verfahren nach Anspruch 1,
**dadurch gekennzeichnet,**
**dass** Stromfäden erzeugt werden, deren Querschnitt kreisförmig ist.

3. Verfahren nach Anspruch 1,
**dadurch gekennzeichnet,**
**dass** Stromfäden erzeugt werden, deren Querschnitt im wesentlichen rechteckförmig ist mit einem Längen/Breitenverhältnis von größer 2:1.

4. Spritzgießvorrichtung für Kunststoffe mit einer Einspritzeinrichtung, die über mehrere Kanäle mit einer in einem Werkzeug vorgesehenen Kavität (41) in Verbindung steht,
mit einer Einspritzeinrichtung (11), die über eine direkte Verbindungsleitung (12) mit einer Maschinendüse (13) verbunden ist,
wobei zwischen der Maschinendüse (13) und der Kavität (41) ein Materialzuführbauteil (21) vorgesehen ist, und
die Mündung (22) des Materialzuführungsbauteils (21) mehrere Öffnungen (23) aufweist, und
mit einem Antrieb (31), mit dem das Materialzuführungsbauteil (21) in Rotation um die Zentralachse (I) setzbar ist,
**dadurch gekennzeichnet,**
**dass** der mit der Kavität (41) unmittelbar verbundene Teil des Materialzuführbauteils (21) Öffnungen (23) aufweist, deren freie Durchtrittsfläche in Summe mindestens das 1,3-fache der Querschnittsfläche am Austritt der Verbindungsleitung (12) beträgt.

5. Spritzgießanlage nach Anspruch 4,
**dadurch gekennzeichnet,**
**dass** das Materialzuführungsbauteil (21) als Topf (24) ausgestaltet ist, welcher am Kopf (14) der Maschinendüse (13) angeordnet ist, und
**dass** eine der Öffnungen (23) im Zentrum des Topfes (24) koaxial zur Zentralachse (I) vorgesehen ist.

6. Spritzgießanlage nach Anspruch 4,
**dadurch gekennzeichnet,**
**dass** die Maschinendüse (13) von einer Hülse (15) umhüllt wird, die zur Kavität (41) hin einen Boden (26) aufweist, und
**dass** zwischen dem Boden (26) und der Maschinendüse (13) eine einen Puffer bildende Kammer (27) vorgesehen ist.

7. Spritzgießanlage nach Anspruch 6,
**dadurch gekennzeichnet,**
**dass** der Boden (26) mit dem Antrieb (31) über Ritzel (32) mechanisch verbunden und unabhängig von der Hülse (25) in Rotation versetzbar ist.

8. Spritzgießanlage nach Anspruch 4,
**dadurch gekennzeichnet,**
**dass** die Öffnungen (23) Bohrungen sind, die - bezogen auf den Mittelpunkt - auf Kreisbögen angeordnet sind, wobei der Durchmeser der Bohrungen mit deren Abstand zum Mittelpunkt abnimmt.

9. Spritzgießanlage nach Anspruch 4,
**dadurch gekennzeichnet,**
**dass** die Öffnungen (23) im wesentlichen rechteckige Durchtritte sind, deren Längen-/Breitenverhältnis l/b ≥ 2 beträgt.

10. Spritzgießanlage nach Anspruch 9,
**dadurch gekennzeichnet,**
**dass** die eine größere Länge (l) als Breite (b) aufweisenden als Durchtritte ausgestalteten Öffnungen (23) Teile von Ringen sind, die konzentrisch zum Mittelpunkt angeordnet sind.

11. Spritzgießanlage nach einem der Ansprüche 4 bis 10,
**dadurch gekennzeichnet,**
**dass** die Öffnungen (23) im Boden (26) des Materialzuführungsbauteils (21) in Fließrichtung konisch zulaufen.

12. Spritzgießanlage nach Anspruch 11,
**dadurch gekennzeichnet,**
**dass** der Konus der im Zentrum des Bodens (26) angeordneten Öffnung (23) einen Winkel (α) aufweist, der deutlich größer ist als der Winkel (β) der übrigen Öffnungen (23).

13. Spritzgießanlage nach Anspruch 4,
**dadurch gekennzeichnet,**
**dass** der Antrieb (31) an dem die Kavität (43) aufnehmenden Werkzeug (42) befestigt ist.

14. Spritzgießanlage nach Anspruch 6,
**dadurch gekennzeichnet,**
**dass** an dem unabhängig von der Hülse (25) vorgesehenen Boden (26) ein torpedoförmiger Ansatz (28) vorgesehen ist, der durch einen elektromagnetischen Antrieb (33) in Rotation versetzbar ist.

15. Spritzgießanlage nach Anspruch 4,
**dadurch gekennzeichnet,**
**dass** in der Kavität (41) an der beweglichen Werkzeugplatte (43) ein Prallelement (44) vorgesehen ist, das eine Auskolkung (45) besitzt.

## Claims

1. Method of injection-moulding a plastics compound with an injection-moulding device into a cavity (41), wherein
a) the plastics compound is introduced sequentially into the cavity (41) in the form of independent flow filaments, and during the injection-moulding operation the flow filaments of the plastics compound located in the part of the centre run at a higher speed than the remaining flow filaments,
b) at the same time the flow filaments are turned by rotation of the material supply component having the apertures,
c) and after filling and cooling of the cavity, the material is sheared off at the sprue by maintaining rotation of the material supply apertures (23).

2. Method according to claim 1, **characterised in that** flow filaments are generated whose cross-section is circular.

3. Method according to claim 1, **characterised in that** flow filaments are generated whose cross-section is substantially rectangular with a length/breadth ratio of more than 2:1.

4. Injection-moulding apparatus for plastics materials having an injection-moulding device which communicates with a cavity (41) in a tool via a plurality of channels,
having an injection-moulding device (11), which is connected to a machine nozzle (13) via a direct connecting line (12),
wherein between the machine nozzle (13) and the cavity (41) a material supply component (21) is provided, and
the mouth (22) of the material supply component (21) has a plurality of apertures (23), and
having a drive (31), with which the material supply component (21) can be set in rotation about the central axis (I),
**characterised in that** the part of the material supply component (21) directly connected to the cavity (41) has apertures (23), whose clear throughput area in total is at least equal to 1.3 times the cross-sectional area at the outlet of the connecting line (12).

5. Injection-moulding apparatus according to claim 4, **characterised in that** the material supply component (21) is formed as a pot (24), which is disposed at the head (14) of the machine nozzle (13), and **in that** one of the apertures (23) is provided in the centre of the pot (24), coaxial to the central axis (I).

6. Injection-moulding apparatus according to claim 4, **characterised in that** the machine nozzle (13) is encased in a sleeve (15), which has a base (26) towards the cavity (41), and **in that** between the base (26) and the machine nozzle (13) is provided a chamber (27) forming a buffer.

7. Injection-moulding apparatus according to claim 6, **characterised in that** the base (26) is mechanically connected to the drive (31) via a pinion (32) and can be set in rotation independently of the sleeve (25).

8. Injection-moulding apparatus according to claim 4, **characterised in that** the apertures (23) are bores, which, relative to the central point, are disposed on arcs of a circle, the diameter of the bores decreasing with their distance from the central point.

9. Injection-moulding apparatus according to claim 4, **characterised in that** the apertures (23) are substantially rectangular perforations, whose length/breadth ratio l/b≥2.

10. Injection-moulding apparatus according to claim 9, **characterised in that** the apertures (23) having a longer length (I) than their breadth (b) and formed as perforations are parts of rings arranged concentrically to the central point.

11. Injection-moulding apparatus according to one of claims 4 to 10, **characterised in that** the apertures (23) conically converge in the base (26) of the material supply component (21) in the direction of flow.

12. Injection-moulding apparatus according to claim 11, **characterised in that** the cone of the apertures (23) disposed in the centre of the base (26) has an angle (α) which is significantly larger than the angle (β) of the remaining apertures (23).

13. Injection-moulding apparatus according to claim 4, **characterised in that** the drive (31) is fixed to the tool (42) containing the cavity (43).

14. Injection-moulding apparatus according to claim 6, **characterised in that** on the base (26) provided independently of the sleeve (25) a torpedo-shaped projection (28) is provided, which can be set in rotation by an electromagnetic drive (33).

15. Injection-moulding apparatus according to claim 4, **characterised in that** an impact element (44) having a crater (45) is provided in the cavity (41) on the moving tool plate (43).

## Revendications

1. Procédé pour l'injection d'une masse de matière plastique dans une cavité (41) au moyen d'un dispositif d'injection, dans lequel
a) la masse de matière plastique sous la forme de veines de flux indépendantes est introduite de façon séquentielle dans la cavité (41), les veines du flux de la masse de matière plastique se trouvant dans la partie centrale précédant les autres veines du flux pendant le processus d'injection,
b) les veines du flux sont simultanément enroulées de façon hélicoïdale par la rotation de l'élément d'amenée de matière comportant les orifices (23), et
c) après le remplissage et le refroidissement de la cavité, l'injection est cisaillée par le maintien de la rotation des orifices (23) d'amenée de matière.

2. Procédé selon la revendication 1,
**caractérisé en ce qu'**on engendre des veines du flux dont la section transversale est circulaire.

3. Procédé selon la revendication 1,
**caractérisé en ce qu'**on engendre des veines du flux dont la section transversale est sensiblement rectangulaire avec un rapport longueur/largeur supérieur à 2/1.

4. Dispositif de moulage par injection pour matières plastiques, comportant un dispositif d'injection qui, par l'intermédiaire de plusieurs canaux, est en liaison avec une cavité (41) prévue dans un outil,
avec un dispositif d'injection (11) qui est relié à une tuyère (13) de machine par l'intermédiaire d'une conduite de liaison directe (12),
un élément d'amenée (21) de matière étant prévu entre la tuyère (13) de machine et la cavité (41), et
l'ouverture (22) de l'élément d'amenée (21) de matière présentant plusieurs orifices (23), et
avec un entraînement (31), au moyen duquel l'élément d'amenée (21) de matière peut être mis en rotation autour de l'axe central (1),
**caractérisé en ce que** la partie de l'élément d'amenée (21) de matière reliée directement à la cavité (41) comporte des orifices (23), dont la somme de la surface de passage libre est au moins égale à 1,3 fois la surface en section transversale au niveau de la sortie de la conduite de liaison (12).

5. Installation de moulage par injection selon la revendication 4,
**caractérisée en ce que** l'élément d'amenée (21) de matière est agencé sous la forme d'un pot (24), qui est disposé sur la tête (14) de la tuyère (13) de machine, et **en ce que** l'un des orifices (23) dans le centre du pot (24) est prévu coaxialement à l'axe central (1).

6. Installation de moulage par injection selon la revendication 4,
**caractérisée en ce que** la tuyère (13) de machine est entourée par un manchon (15) qui comporte un fond (26) en direction de la cavité (41), et **en ce qu'**une chambre (27) formant un tampon est prévue entre le fond (26) et la tuyère (13) de machine.

7. Installation de moulage par injection selon la revendication 6,
**caractérisée en ce que** le fond (26) est relié mécaniquement à l'entraînement (31) par l'intermédiaire d'un pignon (32), et peut être mis en rotation indépendamment du manchon (25).

8. Installation de moulage par injection selon la revendication 4,
**caractérisée en ce que** les orifices (23) sont des perçages qui - par rapport au centre - sont disposés sur des arcs de cercle, le diamètre des perçages diminuant avec leur écartement par rapport au centre.

9. Installation de moulage par injection selon la revendication 4,
**caractérisée en ce que** les orifices (23) sont pour l'essentiel des passages rectangulaires, dont le rapport longueur/largeur l/b est ≥ 2.

10. Installation de moulage par injection selon la revendication 9,
**caractérisée en ce que** les orifices (23) agencés en tant que passages, d'une longueur (1) plus importante que leur largeur (b), sont des parties d'anneaux disposés de façon concentrique par rapport au centre.

11. Installation de moulage par injection selon l'une quelconque des revendications 4 à 10,
**caractérisée en ce que** les orifices (23) pratiqués dans le fond (26) de l'élément d'amenée (21) de matière se rétrécissent de façon conique dans le sens de l'écoulement.

12. Installation de moulage par injection selon la revendication 11,
**caractérisée en ce que** l'angle (α) du cône des orifices (23) pratiqués au centre du fond (26) est nettement supérieur à l'angle (β) des autres orifices (23).

13. Installation de moulage par injection selon la revendication 4,
**caractérisée en ce que** l'entraînement (31) est fixé sur l'outil (42) recevant la cavité (43).

14. Installation de moulage par injection selon la revendication 6,
**caractérisée en ce qu'**un épaulement (28) en forme de torpille est prévu sur le fond (26) prévu indépendamment du manchon (25), lequel peut être mis en rotation par un entraînement électromagnétique (33).

15. Installation de moulage par injection selon la revendication 4,
**caractérisée en ce que**, dans la cavité (41), un élément de déviation (44) comportant un cratère (45) est prévu sur la plaque d'outil mobile (43).
